# EUROPEAN PATENT SPECIFICATION

(11) **EP 3 899 325 B1**
(45) Date of publication and mention of the grant of the patent: **12.03.2025**
(21) Application number: 19838954.6
(22) Date of filing: 17.12.2019
(51) Int. Cl.: F16H 63/34

(54) **IMPROVED PARK LOCK SYSTEM**
VERBESSERTES PARKSPERRSYSTEM
SYSTÈME DE VERROUILLAGE DE STATIONNEMENT AMÉLIORÉ

(30) Priority: 18.12.2018 IT 201800020113
(43) Date of publication of application: 27.10.2021
(73) Proprietor: FPT Industrial S.p.A., 10156 Torino (IT)
(72) Inventor: MANTOVAN, Alessandro, 10050 Sant'Antonino di Susa (TO) (IT); COLACITO, Emanuele, 65126 Pescara (IT)
(74) Representative: Studio Torta S.p.A.
(86) International application number: PCT/IB2019/060905
(87) International publication number: WO 2020/128820

(56) References cited:
- DE-A1- 102010 029 400
- US-A1- 2007 283 735
- US-A1- 2017 234 427

## Description

### TECHNICAL FIELD

The invention relates to a park lock system, more in particular to a park lock system for a vehicle provided with an automatic transmission for speed reduction.

### KNOWN STATE OF THE ART

The use of a park lock system, also known as parking lock, is known, said park lock system being configured to mechanically lock the wheels of the vehicle when the latter is parked.

In particular, the use of this device is aimed at preventing the elements of the powertrain from being overloaded, releasing the engine from the wheels of the vehicle.

An example of known park lock system includes a shape coupling comprising a gear, which is integral to a shaft of the powertrain of the vehicle, and a pawl, also known as "pawl lever", which is configured to cooperate with the gear in order to stop the rotation thereof by engaging an end portion of its in one of the spaces defined by the teeth of the gear.

Said pawl can be controlled in different ways, for example hydraulically, mechanically or electrically, when the user of the vehicle uses the lever of the parking brake.

The shape coupling should further include a so-called "Return Fail Safe", namely a system which is intrinsically safe, even in case of fault of one of the components of the hydraulic, mechanical or electric actuator, which controls the pawl. In particular, in case of fault of the operating system, the shape coupling needs to be controlled so as to stop the vehicle in a stable safety state.

However, electric actuators for the components of the vehicle are increasingly needed in order to allow for a greater and greater automation in vehicle drive.

Example of known park lock system are disclosed in US2007/283735 A1 or in US2017234427 A1.

The first document, though, shows a hydraulic lock system, which, hence, needs a dedicated hydraulic control circuit.

The second document, on the other hand, shows an electric lock system comprising magnetic means, which are configured to keep the system in the locked or released configuration assumed by the lock system.

DE 10 2010 029 400 A1 describes a park lock system comprising an electrically driven screw-nut screw system housed inside a carcass.

In the light of the documents discussed above, there is a clear need for an electrically operated park lock system, which is intrinsically safe according to the requirements of the "Fail Safe" systems.

Furthermore, a park lock system is needed, which is effective, economic to be manufactured and quick to be assembled.

The object of the invention is to fulfil the needs discussed above in an economic and optimized fashion.

### SUMMARY OF THE INVENTION

The aforesaid object is reached by a means of a park lock system according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 shows a schematic sectional front view, with parts removed for greater clarity, of a park lock system according to the invention in a first operating phase; and
- figure 2 shows a schematic sectional front view, with parts removed for greater clarity, of a park lock system according to the invention in a second operating phase.

### DETAILED DESCRIPTION OF THE INVENTION

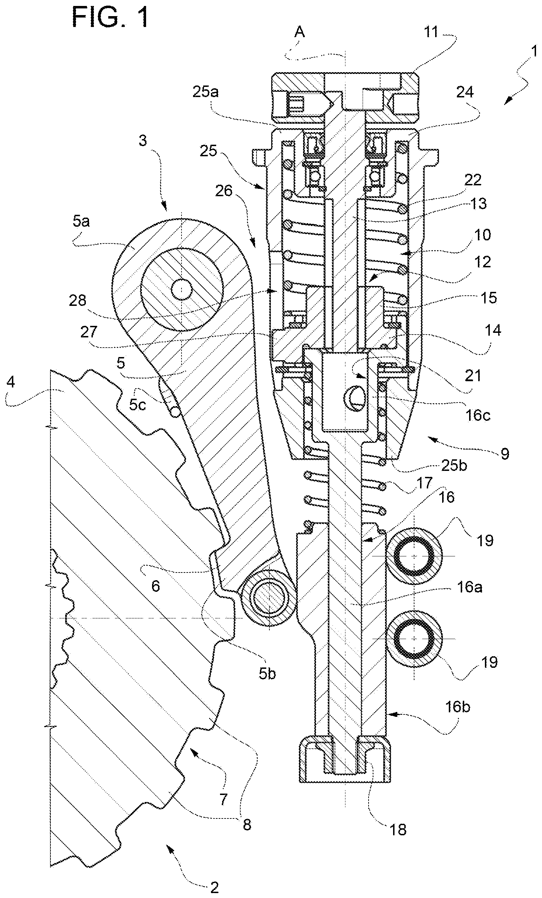

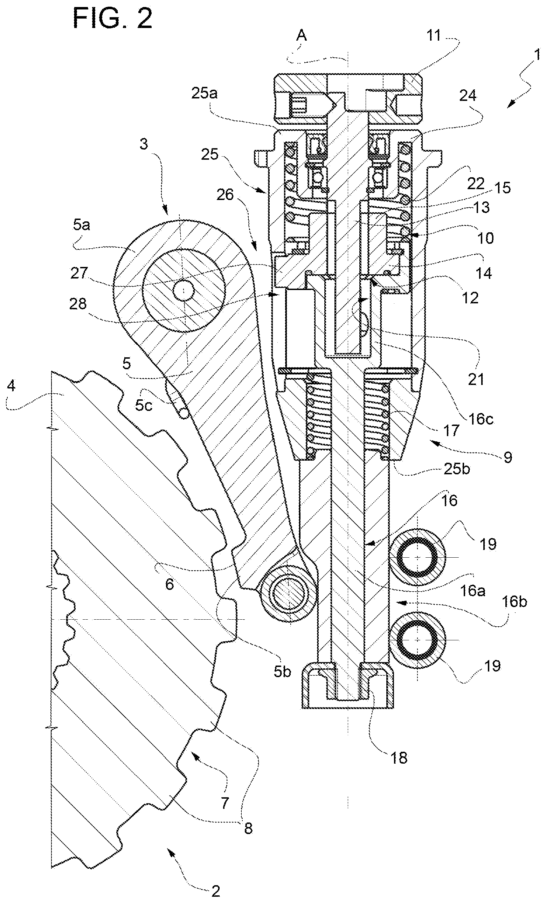

Figures 1 and 2 show a park lock system 1 basically comprising a first stopping element 2, which is configured to be carried by an element of the powertrain of a vehicle, and a second stopping element 3, which is configured to assume a first position (figure 1), in which it does not cooperate with the first stopping means 2, and a second position (figure 2), in which it cooperates with the first stopping means 2, locking the movement thereof and, hence, locking the movement of the powertrain of the vehicle.

In particular, as it is known, the first stopping means 2 can comprise a gear 4, which is splined on the shaft of the powertrain of the vehicle, and the second stopping means 3 can comprise a pawl 5, which is configured to selectively cooperate with the gear 4, locking the movement thereof similarly to a two-way ratchet system.

As it is known, the pawl 5 comprises a first end portion 5a, which is carried so as to be free to rotate, for example is hinged, relative to a carcass of the powertrain of the vehicle or to another element thereof which is fixed relative to the output shaft of the powertrain to which the gear 4 is connected, and a second end portion 5b, which is placed on the opposite side relative to the first portion 5a and comprises a radial projection 6, which is configured to selectively cooperate in contact with the gear 4, in particular in a space 7 between two consecutive teeth 8 of the gear 4 so as to prevent the latter from rotating.

In particular, the first end portion 5a comprises elastic means 5c, which are configured to keep the second end portion 5b and, hence, the projection 6 in a first position corresponding to a condition of non-cooperation with the gear 4. The hinge connection of the first end portion 5a allows the second end portion 5b to move around the hinge axis defined by the aforesaid first end portion 5a due to the action of a consequent moving force, so as to reach the aforesaid second position corresponding to a condition of contact cooperation of the projection 6 with the gear 4.

The park lock system 1 further comprises actuator means 9, which are configured to supply a moving force to the pawl 5 so that the second end portion 5b shifts between the aforesaid first position and second position and, hence, between the aforesaid first and second operating conditions.

According to the invention, the actuator means 9 further comprise safety means 10, which are configured to automatically supply a moving force to the pawl 5 so that the second end portion 5b shifts between the aforesaid first position and second position according to a pre-set condition.

Advantageously, the actuator means 9 comprise an electric actuator 11, preferably an electric motor, and a screw-nut screw system 12, which is controlled by the electric actuator 11 and is configured to move the second end portion 5b from the first to the second operating condition, as described below. Consequently, the pre-set operating condition of the safety means 10 can be a lack of power supply to the electric actuator 11, for example a voltage drop or a short circuit, or any other fault jeopardizing the operation thereof.

According to the embodiment described herein, the screw-nut screw system 12 comprises a screw 13 rotating around an axis A and configured to be operated by the rotary electric actuator 11 and a nut screw 14 carried by the screw 13 in a known manner thanks to a male-female thread system obtained between the screw 13 and the nut screw 14. Preferably, the screw 13 is connected to a rotor of the electric motor comprised in the actuator 11, however it is clear that it could be operated in an electromagnetic manner by means of a pair of magnets rotating because of an impulse of the actuator 11. In particular, the screw-nut screw system 12 is self-braking, namely it needs a pre-set minimum torque in order to allow the nut screw 14 to move relative to the screw 13.

The nut screw 14 preferably comprises an annular element 15 with a substantially cylindrical shape, which is configured to carry a rod 16, which extends along the axis A on the opposite side of the annular element 15 relative to the screw 13 and is configured to cooperate in contact with the second end 5b of the pawl 5.

According to the embodiment described herein, the rod 16 comprises an end portion 16b, which radially extends from a central portion 16a of the rod 16 and is configured to cooperate in contact with the second end portion 5b. Preferably, said end portion 16b is carried by the central portion 16 so as to slide along the axis A and elastic means 17 are provided, which are interposed between the annular element 15 and the end portion 16b and are configured to keep the latter against a stop element 18, for example a threaded element carried by a terminal portion of the central portion 16a of the rod 16, protruding relative to the end portion 16b.

In particular, hence, the elastic means 17 comprise a torsion spring, namely a spring which is configured to generate an axial force, for example a helical spring,
in order to keep the portion 16b in contact with the pawl 5 during the entire feed phase of the actuator means 9. During this phase, indeed, the possible residual rotation of the gear 4 could resist the immediate insertion of the parking lock, as a consequence the pawl 5 would start "jumping" on the gear 4. The spring 17 generates a continuous contact between the parts, so as to allow the engagement to take place as soon at the conditions are favourable for the insertion of the tooth of the pawl 5 into the compartment 7 of the wheel 4.

According to the embodiment described herein, the park lock system 1 can further comprise lateral containing means 19, which are carried by the vehicle in a fixed manner relative to the end portion 16b and are configured to bear lateral loads due to the reaction caused by the second end portion 5b in the end portion 16b of the rod 16 when cooperating in contact with the latter in order to bring it from the first to the second position. For example, said lateral containing means 19 can comprise rollers or rolling bearings.

Advantageously, the annular element 15 is hollow and the screw 13 can coaxially be engaged inside the latter; as a consequence of the embodiment described herein, the central portion 16a defines, in a second end portion 16c opposite the portion 16b and facing the screw 13, a seat 21, which is configured to delimit an upper limit stop for the annular element 15. Indeed, while the screw 13 rotates around the axis A in a first rotary direction, the annular element 15 moves along the thread of the screw 13, carrying the rod 16 with itself; consequently, the screw 13 tends to get more and more inserted into the seat 21, until an end portion thereof touches a bottom wall of the seat 21, which, hence, delimits the maximum possible movement of the annular element 15.

Advantageously, the safety means 10 comprise elastic means 22, which are interposed between the nut screw 14 and an element integral to the screw 13 and are configured to apply a pre-set load to the nut screw 14 so as to move it in a second rotary direction relative to the screw 13, so that the annular element 15, by rotating, moves along the axis A away from the screw 13, thus carrying the rod 16 with itself so that the terminal portion 16b of the latter cooperates with the pawl 5 as described above.

In particular, the elastic means 22 comprise a torsion spring comprising a first end, which is connected to the aforesaid integral element, and a second end, which is connected to the nut screw 14 and is configured to apply an axial force designed to cause the nut screw 14 to move along the axis A.

Advantageously, said integral element is a carcass 24 configured to house the screw-nut screw system 12, in particular configured to house the annular element 15 and cooperate with the latter in a sliding manner, so as to also provide a lateral guide for the axial movement thereof along the axis A, as described more in detail below. Advantageously, the carcass 24 is fixed to a portion of the vehicle which is fixed relative to the powertrain of the vehicle itself, preferably the same portion to which the pawl 5 is hinged.

Advantageously, the carcass 24 comprises a cylindrical annular lateral wall 25 comprising an upper axial end portion 25a, which is configured to allow for the passage of the screw 13 and the fixing of an end of the torsion spring 23, and a second lower axial end portion 25b, which is substantially open and is configured to allow for the housing of the elastic means 17 and of the rod 16.

As it is known and, therefore, not described in detail herein for the sake of brevity, the carcass 24 is configured to accommodate, inserted on the inside, rolling mounting means, which allow for the rotation of the screw 13, and an oil rotary gasket.

Advantageously, between the nut screw 15 and the carcass 24 there is an anti-rotation system 26, which is configured not to permit the rotation of the nut screw 15 relative to the carcass 24 and to only permit the movement thereof along the axis A. Preferably, said system comprises a pin/peg 27, which is carried by the element 15, preferably manufactured as one single piece together with the latter, and cooperates in contact with a guide 28, which is parallel to the axis A and can be obtained in the lateral wall 25 of the carcass 24.

The park lock system 1 described above works as follows.

In a first operating condition, in which the park lock system 1 does not need to be activated, the electric actuator 11 keeps the annular element 15 in its upper limit stop position, in which the elastic means 22 are compressed between the annular element 15 and the carcass 24.

In a second operating condition, in which the user parks the vehicle activating the parking brake and in which the actuator 11 is working, the latter rotates the screw 13 so that the annular element 15 moves in the second rotary direction described above, thus causing the end portion 16b of the rod 16 to come out moving it away from the screw 13/carcass 24 and, hence, allowing it to come into contact with the pawl 5. In this way, by cooperating in contact, the force provided by the electric actuator 11 overcomes the resistances of the elastic means keeping the pawl 5 in the first operating condition, moving it to the second operating condition, hence causing the second portion 5b to rotate around the hinge defined by the first portion 5a, thus allowing the projection 6 to cooperate with the gear 4, as discussed above.

When the user disengages the parking brake, the actuator 11 causes the screw 13 to rotate in an opposite direction, so that the annular element 15 moves in the first rotary direction, which is opposite the aforesaid second direction, going back to its upper limit stop position described in the first operating condition.

In the two operating phases described above, the safety means 10 help the movement of the annular element 15 when it moves from the upper limit stop point to the position in which the rod 16 cooperates with the pawl 5, providing a force that adds up to the torque delivered by the actuator 11, whereas, in the opposite case, they tend to supply a force that is opposite the torque delivered by the actuator 11, compressing and loading for a successive normal operating cycle or for an emergency operation as described below.

In case of fault and/or lack of power supply to the electric actuator 11, the latter cannot bear the pre-load torque generated by the elastic means 22, which, hence, tend to open causing the annular element 15 to move around the screw 13 in the second rotary direction, thus causing the screw 13 to rotate and, hence, causing the rod 16 to cooperate with the pawl 5 as described above, thus stopping the vehicle in safety.

Owing to the above, the advantages of the park lock system 1 according to the invention are evident.

The park lock system 1 uses an electric actuator 11, which can easily be controlled and automated and, at the same time, is intrinsically safe thanks to the safety means 10 that allow the stopping means 2, 3 to engage one another in case of fault of the electric actuator 11.

The use of a screw-nut screw system 12 coupled to the electric actuator 11 to control the stopping means 3 allows the latter to be controlled with low torques, as the screw-nut screw system can multiply the force applied to the stopping means 3, thus allowing for a smaller consumption of energy by the vehicle.

Furthermore, a screw-nut screw system 12 is economic and easy to be manufactured and can be used and sized for any type of stopping means 2, 3.

The use of a torsion spring 22 as safety means 10 allows manufacturers to obtain, in an economic and easy-to-be-assembled manner, a great torque which can be applied to the screw-nut screw system 12 when the actuator 11 is faulty/without power supply.

Finally, the park lock system 1 according to the invention can clearly be subjected to changes and variants, which, though, do not go beyond the scope of protection set forth in the appended claims.

For example, the dual system of the screw-nut screw system 12 described herein can be used in an equivalent manner simply switching the connections between electric actuator 11 and safety means 10.

Or the pre-set operating condition could be different or could be actively operated by a control of an electronic unit on the actuator 11.

Finally, it is clear that the carcass 24 could have a different shape or the rod 16, the pawl 5 and the gear 4 could be replaced by elements having the same function but a different shape.

## Claims

1. - A park lock system (1) comprising first stopping means (2) configured to be carried by a transmission element of a vehicle and second stopping means (3) configured to assume a first position in which it does not cooperate with said first stopping means (2) and a second position in which it cooperates in contact with said first stopping means (2) blocking the movement thereof, said park lock device (1) comprising actuator means (9) of said second stopping means (3) configured to carry said second stopping means (3) from said first position to said second position, said actuator means (9) comprising safety means (10) configured to automatically carry said second stopping means (3) from said first position to said second position according to a pre-set condition, wherein said actuator means (9) comprise an electric actuator (11), said pre-set condition being an electric fault or an absence of power of said electric actuator (11), wherein said actuator means (9) comprise a screw-nut screw system (12) comprising a screw (13) and a nut screw (14), one of either said screw (13) or said nut screw (14) being configured to cooperate in contact with said second stopping means (3) and the other of either said screw (13) or said nut screw (14) being controlled by said electric actuator (11), one between said screw (13) or said nut screw (14) being configured to assume a first position in which it does not cooperate with said second stopping means (3) and a second position in which it cooperates in contact with the latter so as to cooperate in contact with said first stopping means (2),
said safety means (10) comprising elastic means (22) operatively interposed between said screw (13) and said nut screw (14) to carry one between said screw (13) or said nut screw (14) from said first position to said second position according to said pre-set condition,
wherein
said park lock system comprises a carcass (24) configured to internally house, at least partially, said screw-nut screw system (12) and said safety means (10), said carcass (24) being coaxial to an axis (A) of said screw-nut screw system (12),
wherein said carcass (24) is configured to slidingly cooperate with one within said nut-screw screw system (12) for laterally guiding the latter during its movement, and comprises an anti-rotation system (26), which is configured to allow one within said nut-screw screw system (12) to exclusively move along said axis (A).

2. The park lock system according to claim 1, wherein said elastic means (10) comprise a torsion spring (22) comprising a first end fixed to one within said nut-screw screw system (12) and a second end fixed to an element that is fixed in respect to the other within said screw-nut screw system (12).

3. The park lock system according to one of the claims 1 or 2, wherein said electric actuator (11) is an electric motor.

4. The system according to any of claims 1 to 3, wherein said anti-rotation system (26) comprises a pin (27) carried by one of either said screw-nut screw system (12) and said carcass (23), which is configured to cooperate in a guide (28), which is parallel to said axis (A) and in obtained in the other of either said screw-nut screw system (12) and said carcass (23).

5. The park lock system according to one of the claims 1 to 4, comprising a rod (16) provided with a first end (16c) connected to one within said screw-nut screw system (12) and a second end (16b) opposite said first end (16c) configured to cooperate in contact with said second stopping means (3).

6. The park lock system according to claim 5, comprising containment means (19) configured to support, at least laterally, said second end (16b) of said rod (16) when said second end (16b) cooperates in contact with said second stopping means (3).

## Patentansprüche

1. Parksperrsystem (1), das ein erstes Anschlagmittel (2), das konfiguriert ist, durch ein Getriebeelement eines Fahrzeugs getragen zu werden, und ein zweites Anschlagmittel (3), das konfiguriert ist, eine erste Position, an der es nicht mit dem ersten Anschlagmittel (2) zusammenwirkt, und eine zweite Position, an der es in Kontakt mit dem ersten Anschlagmittel (2) zusammenwirkt und dessen Bewegung blockiert, einzunehmen, umfasst, wobei die Parksperrvorrichtung (1) Betätigungsmittel (9) des zweiten Anschlagmittels (3) umfasst, die konfiguriert sind, das zweite Anschlagmittel (3) von der ersten Position in die zweite Position zu führen, wobei die Betätigungsmittel (9) Sicherheitsmittel (10) umfassen, die konfiguriert sind, das zweite Anschlagmittel (3) unter einer vorgegebenen Bedingung automatisch von der ersten Position in die zweite Position zu führen, wobei die Betätigungsmittel (9) einen elektrischen Aktor (11) umfassen, wobei die vorgegebene Bedingung ein Fehler in der Elektrik oder das Fehlen von Energie für den elektrischen Aktor (11) ist,
wobei die Betätigungsmittel (9) ein Schraube-Mutter-Gewindespindelsystem (12) umfassen, das eine Gewindespindel (13) und eine Schraubenmutter (14) umfasst, wobei eine der Gewindespindel (13) und der Schraubenmutter (14) konfiguriert ist, in Kontakt mit dem zweiten Anschlagmittel (3) zusammenzuwirken, und die andere der Gewindespindel (13) und der Schraubenmutter (14) durch den elektrischen Aktor (11) gesteuert wird, wobei entweder die Gewindespindel (13) oder die Schraubenmutter (14) konfiguriert ist, eine erste Position, in der sie nicht mit dem zweiten Anschlagmittel (3) zusammenwirkt, und eine zweite Position, in der sie in der Weise in Kontakt mit letzterem zusammenwirkt, dass es in Kontakt mit dem ersten Anschlagelement (2) zusammenwirkt, einzunehmen,
wobei die Sicherheitsmittel (10) elastische Mittel (22) umfassen, die betriebstechnisch zwischen der Gewindespindel (13) und der Schraubenmutter (14) eingefügt sind, um entweder die Gewindespindel (13) oder die Schraubenmutter (14) gemäß der vorgegebenen Bedingung von der ersten Position in die zweite Position zu führen,
wobei das Parksperrsystem einen Rahmen (24) umfasst, der konfiguriert ist, das Schraube-Mutter-Gewindespindelsystem (12) und die Sicherheitsmittel (10) zumindest teilweise in sich aufzunehmen, wobei der Rahmen (24) zu einer Achse (A) des Schraube-Mutter-Gewindespindelsystems (12) koaxial ist,
wobei der Rahmen (24) konfiguriert ist, mit einem Element im Mutter-Schraube-Gewindespindelsystem (12) zum seitlichen Führen von letzterem während seiner Bewegung gleitend zusammenzuwirken, und ein Drehverhinderungssystem (26) umfasst, das konfiguriert ist zu ermöglichen, dass sich ein Element im Mutter-Schraube-Gewindespindelsystem (12) ausschließlich entlang der Achse (A) bewegt.

2. Parksperrsystem nach Anspruch 1, wobei die elastischen Mittel (10) eine Torsionsfeder (22) umfassen, die ein erstes Ende, das an einem Element im Mutter-Schraube-Gewindespindelsystem (12) arretiert ist, und ein zweites Ende, das an einem Element arretiert ist, das in Bezug auf das andere Element im Schraube-Mutter-Gewindespindelsystem (12) feststehend ist, umfasst.

3. Parksperrsystem nach einem der Ansprüche 1 oder 2, wobei der elektrische Aktor (11) ein Elektromotor ist.

4. System nach einem der Ansprüche 1 bis 3, wobei das Drehverhinderungssystem (26) einen Stift (27), der durch eines des Schraube-Mutter-Gewindespindelsystems (12) und des Rahmens (23) getragen wird, umfasst, der konfiguriert ist, in einer Führung (28), die zur Achse (A) parallel ist und im anderen des Schraube-Mutter-Gewindespindelsystems (12) und des Rahmens (23) enthalten ist, zusammenzuwirken.

5. Parksperrsystem nach einem der Ansprüche 1 bis 4, das eine Stange (16) umfasst, die ein erstes Ende (16c), das mit einem Element im Schraube-Mutter-Gewindespindelsystem (12) verbunden ist, und ein zweites Ende (16b), das dem ersten Ende (16c) gegenüberliegt und konfiguriert ist, in Kontakt mit dem zweiten Anschlagmittel (3) zusammenzuwirken, aufweist.

6. Parksperrsystem nach Anspruch 5, das Einschlussmittel (19) umfasst, die konfiguriert sind, das zweite Ende (16b) der Stange (16) zumindest seitlich zu tragen, wenn das zweite Ende (16b) in Kontakt mit dem zweiten Anschlagmittel (3) zusammenwirkt.

## Revendications

1. Système de verrouillage de stationnement (1) comprenant des premiers moyens d'arrêt (2) conçus pour être portés par un élément de transmission d'un véhicule et des seconds moyens d'arrêt (3) conçus pour adopter une première position dans laquelle ils ne coopèrent pas avec lesdits premiers moyens d'arrêt (2) et une seconde position dans laquelle ils coopèrent en contact avec lesdits premiers moyens d'arrêt (2) en bloquant leur mouvement, ledit dispositif de verrouillage de stationnement (1) comprenant des moyens actionneurs (9) desdits seconds moyens d'arrêt (3) conçus pour porter lesdits seconds moyens d'arrêt (3) de ladite première position à ladite seconde position, lesdits moyens actionneurs (9) comprenant des moyens de sécurité (10) configurés pour porter automatiquement lesdits seconds moyens d'arrêt (3) de ladite première position à ladite seconde position selon une condition prédéfinie, dans lequel lesdits moyens actionneurs (9) comprennent un actionneur électrique (11), ladite condition prédéfinie étant une défaillance électrique ou une absence de puissance dudit actionneur électrique (11),
dans lequel lesdits moyens actionneurs (9) comprennent un système de vis-écrou (12) comprenant une vis (13) et un écrou (14), l'un(e) soit de ladite vis (13) soit dudit écrou (14) étant conçu(e) pour coopérer en contact avec lesdits seconds moyens d'arrêt (3) et l'autre soit de ladite vis (13) soit dudit écrou (14) étant commandé(e) par ledit actionneur électrique (11), l'un(e) entre ladite vis (13) et ledit écrou (14) étant conçu(e) pour adopter une première position dans laquelle il/elle ne coopère pas avec lesdits seconds moyens d'arrêt (3) et une seconde position dans laquelle il/elle coopère en contact avec ces derniers de manière à coopérer en contact avec lesdits premiers moyens d'arrêt (2),
lesdits moyens de sécurité (10) comprenant des moyens élastiques (22) fonctionnellement interposés entre ladite vis (13) et ledit écrou (14) pour porter l'un(e) entre ladite vis (13) et ledit écrou (14) de ladite première position à ladite seconde position selon ladite condition prédéfinie,
dans lequel
ledit système de verrouillage de stationnement comprend une carcasse (24) configurée pour loger en interne, au moins partiellement, ledit système de vis-écrou (12) et lesdits moyens de sécurité (10), ladite carcasse (24) étant coaxiale à un axe (A) dudit système de vis-écrou (12),
dans lequel ladite carcasse (24) est configurée pour coopérer de façon coulissante avec l'un(e) à l'intérieur dudit système de vis-écrou (12) pour guider latéralement ce dernier pendant son mouvement, et comprend un système anti-rotation (26), qui est conçu pour permettre à l'un(e) à l'intérieur dudit système de vis-écrou (12) de se déplacer exclusivement le long dudit axe (A).

2. Système de verrouillage de stationnement selon la revendication 1, dans lequel lesdits moyens élastiques (10) comprennent un ressort de torsion (22) comprenant une première extrémité fixée à l'un(e) à l'intérieur dudit système de vis-écrou (12) et une seconde extrémité fixée à un élément qui est fixé par rapport à l'autre à l'intérieur dudit système de vis-écrou (12).

3. Système de verrouillage de stationnement selon l'une des revendications 1 ou 2, dans lequel ledit actionneur électrique (11) est un moteur électrique.

4. Système selon l'une quelconque des revendications 1 à 3, dans lequel ledit système anti-rotation (26) comprend une broche (27) portée par l'un(e) soit dudit système de vis-écrou (12) soit de ladite carcasse (23), qui est conçue pour coopérer dans un guide (28), qui est parallèle audit axe (A) et est obtenu dans l'autre de soit ledit système de vis-écrou (12) soit ladite carcasse (23).

5. Système de verrouillage de stationnement selon l'une des revendications 1 à 4, comprenant une tige (16) dotée d'une première extrémité (16c) reliée à l'un(e) à l'intérieur dudit système de vis-écrou (12) et une seconde extrémité (16b) opposée à ladite première extrémité (16c) conçue pour coopérer en contact avec lesdits seconds moyens d'arrêt (3).

6. Système de verrouillage de stationnement selon la revendication 5, comprenant des moyens de confinement (19) configurés pour supporter, au moins latéralement, ladite seconde extrémité (16b) de ladite tige (16) lorsque ladite seconde extrémité (16b) coopère en contact avec lesdits seconds moyens d'arrêt (3).
